# EUROPEAN PATENT SPECIFICATION

(11) **EP 4 159 561 B1**
(45) Date of publication and mention of the grant of the patent: **20.11.2024**
(21) Application number: 22198230.9
(22) Date of filing: 28.09.2022
(51) Int. Cl.: B60W 10/02, B60W 10/06, B60W 30/14, B60W 30/18, B60W 30/188

(54) **VEHICLE COMPRISING A CONTROLLER CONFIGURED TO CONTROL SWITCH ON AN INERTIAL TRAVEL MODE**
FAHRZEUG UMFASSEND EINE ZUM EINSTELLEN EINES FREILAUFBETRIEBS EINGERICHTETE KONTROLEINRICHTUNG
VÉHICULE COMPRENANT UNE UNITÉ DE CONTRÔLE CONFIGURÉE POUR ENTRAÎNER UN MODE DE ROULAGE À ROUE LIBRE

(30) Priority: 30.09.2021 JP 2021160711
(43) Date of publication of application: 05.04.2023
(73) Proprietor: HONDA MOTOR CO., LTD., Minato-ku Tokyo 107-8556 (JP)
(72) Inventor: OZEKI, Takashi, 107-8556 Tokyo (JP); TSUKADA, Yoshiaki, 107-8556 Tokyo (JP); ONO, Junya, 107-8556 Tokyo (JP); FURUSATO, Koichi, 107-8556 Tokyo (JP); KAIBE, Yuma, 107-8556 Tokyo (JP); TSUZUKI, Ryohei, 107-8556 Tokyo (JP); FUJIMOTO, Yasushi, 107-8556 Tokyo (JP); RYUZAKI, Tatsuya, 107-8556 Tokyo (JP)
(74) Representative: Kiwit, Benedikt

(56) References cited:
- DE-A1- 102013 021 441
- US-A1- 2004 138 027
- US-A1- 2016 297 445
- US-A1- 2019 184 996

## Description

### BACKGROUND OF THE INVENTION

### Field of the Invention

The present invention relates to a vehicle.

### Description of Related Art

In the related art, in a hybrid vehicle, a technology of stopping an engine during traveling on and improving fuel consumption is known (for example, see JP 2006/ 074 931 A1).

US 2016/ 297 445 A1 shows a method for controlling an automatic transmission unit including at least a transmission with different selectable gear ratios and a clutch and being associated with a propulsion unit for a vehicle. A desired speed of the vehicle is set at a cruise control system, so that the vehicle travels with a set speed. When the vehicle has moved further along the downslope and if no braking has occurred, it is expected that it has reached a speed, which is higher than the initially set speed,. When the vehicle starts to roll down the downslope and there is no fuel demand from the cruise control system in order to maintain the set speed, it assumed that the transmission can be disengaged so that the vehicle enters the freewheeling mode without any engine brake being applied. When the vehicle starts to roll down the downslope and there is no fuel demand from the cruise control system in order to maintain the set speed, it assumed that the transmission can be disengaged so that the vehicle enters the freewheeling mode without any engine brake being applied. When the actual speed becomes higher than a predetermined braking speed, gear is re-engaged in the transmission. The clutch is then released so that the new gear is engaged.

US 2019/ 184 996 A1 shows a powertrain including a prime mover and an electronically controllable clutch. The powertrain structured selectably engages the clutch to provide power from the prime mover to drive one or more ground contacting wheels and to selectably disengage the clutch to decouple with one or more ground contacting wheels. The electronic control system operatively communicates with the prime mover and the electronically controllable clutch, and uses a predictive cruise control (PCC) controller and an idle coast management (ICM) controller, to control vehicle speed during concurrent operation of the PCC controller and the ICM controller. When the vehicle is driven on a downhill grade, a projected vehicle speed is increasing. When the ICM upper limit is hit, the ICM coasting operation is aborted or terminated. At this point, the vehicle speed increases at a reduced rate due to the engagement of the engine with the driveline and reducing acceleration over the downhill until the road grade is zero. The vehicle speed decreases due to a zero fueling condition commanded by the control of PCC controls until the vehicle speed is equal to operator cruise control set speed.

US 2004/ 138 027 A1 shows a method of controlling a motor vehicle with an automated clutch and an automated transmission. A vehicle speed is detected. It is further detected if a brake and/or the gas pedal is actuated and whether or not the engine is running. The clutch is disengaged if it is detected that the engine is running and that at the same time neither the brake nor the gas pedal is actuated while the vehicle is found to be moving faster than a threshold speed. The clutch is subsequently re-engaged if the brake and/or gas pedal is found to be actuated, wherein prior to re-engaging the clutch, a transmission input rpm-rate is determined, and an engine rpm-rate is controlled in such a manner that the respective rpm-rates of the engine and the transmission are brought towards a closer agreement.

DE 10 2013 021441 A1 shows a method for operating a vehicle, wherein a prime mover is coupled to or decoupled from a transmission by means of a clutch. A slip of the clutch is adjusted in more than two steps or continuously in the event of a no-load demand on the prime mover as a function of a drag torque demand. The method has a driving function called slip mode with control of the slip of the clutch. In this case, a clutch position is determined by a control loop, whereby the clutch position and thus the slip thereof are set in such a way that an increase in speed of the vehicle during coasting downhill is limited by means of the engine braking operation with the clutch partially open. Depending on the driving resistance, this results in either the driveline being fully opened, the clutch being fully closed on steeper downhill gradients to implement the engine brake operation and the thrust cutoff, or the clutch being operated in the slip range with a view to low fuel consumption and predetermined speed increase.

### SUMMARY OF THE INVENTION

Incidentally, in vehicles in recent years, as a technology of stopping an engine during traveling on and improving fuel consumption, a coasting mode which disconnects a clutch on a downhill road or the like without performing an engine braking in order to enable inertial traveling has been able to be performed.

In the coasting mode, since a vehicle speed changes according to a distance or a gradient of a downhill road, consideration is required when the coasting mode is combined with a cruise mode which holds a vehicle speed constant.

The applicant gained knowledge about a combination of the coasting mode and the cruise mode in a process of examining a clutch control device configured to control connection/disconnection of a clutch apparatus.

That is, an aspect of the present invention is directed to enabling an efficient combination of a coasting mode and a cruise mode in a vehicle that controls connection/disconnection of a clutch apparatus.
(1) A vehicle according to an aspect of the present invention is a vehicle (1) including a controller (40) configured to switch between a constant speed traveling mode in which a vehicle speed (V) is held constant and an inertial traveling mode in which a prime mover (13) is stopped or in an idling state, and a clutch apparatus (26) configured to connect and disconnect power transmission between the prime mover (13) and an output target (21), wherein the controller (40) is configured to control the clutch apparatus (26) and to decrease a clutch capacity (Cap) so as to transit to the inertial traveling mode when detected that the vehicle is traveling on a downhill road during the constant speed traveling mode, wherein the controller (40) is configured to terminate the inertial traveling mode of the vehicle (1), to control the clutch apparatus (26) and to increase the clutch capacity (Cap) so as to transit to the constant speed traveling mode by performing a first matching control and a second matching control when detected that an inclination of the downhill road has become less than a prescribed angle (θr) during the inertial traveling mode, wherein the second matching control is performed after the first matching control has been performed, wherein the first matching control is a control which connects the clutch apparatus (26) within a half-clutch range while converging an engine rotational speed (Ne) of the prime mover (13) to a rotational speed (Ne 1) during traveling in the constant speed traveling mode so as to match the engine rotational speed (Ne) of the prime mover (13) to the rotational speed (Ne1) during traveling in the constant speed traveling mode before fully connecting the clutch apparatus (26), when terminating the inertial traveling mode and returning to the constant speed traveling mode, wherein the second matching control is a control which gradually increases the clutch capacity (Cap) as the inclination of the downhill road becomes gentle and performs a feedback control which fully connects the clutch apparatus (26) so that a current vehicle speed (V) coincides with a set vehicle speed (V1) of the constant speed traveling mode, and wherein a time range (t34) of the second matching control is set longer than a time range (t23) of the first matching control.
   According to the configuration of the above-mentioned aspect (1), when the vehicle on which the clutch control device is mounted approaches a downhill road during the constant speed traveling mode, the clutch capacity is decreased (as a clutch disconnection state) to be shifted to an inertial traveling mode, and when a state in which the vehicle is traveling on the downhill road with an inclination which became less than a prescribed angle, the inertial traveling mode is terminated so as to return to a constant speed traveling mode. In this way, it is possible to efficiently improve fuel consumption while suppressing discomfort by appropriately switching between the inertial traveling mode and the constant speed traveling mode. Furthermore, when the inertial traveling mode is terminated to return to the constant speed traveling mode, the clutch capacity is feedback-controlled by comparing the current vehicle speed with a target vehicle speed of the constant speed traveling mode. Accordingly, the current vehicle speed can rapidly be made to conform to the target vehicle speed of the constant speed traveling mode after the inertial traveling mode, and the mode can be efficiently returned to the constant speed traveling mode while suppressing discomfort. Since the clutch capacity is increased in a stage in which it reaches the current required engine rotational speed, it is possible to suppress discomfort when returning to the constant speed traveling mode. The increase to the required engine rotational speed is performed by adjusting a throttle opening or a fuel injection amount using the controller.
(2) In the aspect of the above-mentioned (1), the controller (40) may increase the clutch capacity (Cap) and generate engine braking when it is detected that a vehicle speed (V) has increased to a threshold (V2) or more during the inertial traveling mode.
   According to the configuration of the aspect of the above-mentioned (2), when the vehicle speed is increased to a predetermined level or more due to a downhill road during the inertial traveling mode, speed adjustment can be easily performed under clutch control by increasing the clutch capacity and generating engine braking (engine brake). The engine brake may be adjusted by changing the number of operating ports (a variable valve, a cylinder halt, or the like) in the internal combustion engine or by using an exhaust valve provided in the exhaust passage.
(3) In the aspect of the above-mentioned (1), the controller (40) may increase the clutch capacity (Cap) and generate engine braking according to an operation amount of the brake apparatus when it is detected that a brake apparatus has been actuated during the inertial traveling mode.

According to the configuration of the aspect of the above-mentioned (3), when the brake apparatus is actuated due to the driver's operation or the like during the inertial traveling mode, brake assistance can be efficiently performed under clutch control by increasing the clutch capacity and generating engine braking (engine brake) according to an actuation of the brake apparatus.

According to the aspect of the present invention, it is possible to enable an efficient combination of a coasting mode and a cruise mode in a vehicle that controls connection/disconnection of the clutch apparatus.

### BRIEF DESCRIPTION OF THE DRAWINGS

FIG. 1 is a right side view of a motorcycle of an embodiment.
FIG. 2 is a cross-sectional view of a gearbox and a change mechanism of the motorcycle.
FIG. 3 is a block diagram of a gear shift system of the motorcycle.
FIG. 4 is a view for describing transition of a clutch control mode of the motorcycle.
FIG. 5 is a view along an arrow V of FIG. 1 when seen in an axial direction of a clutch actuator.
FIG. 6 is a deployed cross-sectional view in the axial direction of the clutch actuator.
FIG. 7 is a perspective view of a release shaft configured to actuate a clutch apparatus.
FIG. 8 is a cross-sectional view along line VIII-VIII of FIG. 7.
FIG. 9A is a cross-sectional view corresponding to FIG. 8 showing an action in a half clutch region of the release shaft, upon driving by the clutch actuator.
FIG. 9B is a cross-sectional view corresponding to FIG. 8 showing an action in a half clutch region of the release shaft, upon manual intervention.
FIG. 10A is a cross-sectional view corresponding to FIG. 8 showing an action of the release shaft at a standby position, upon driving by the clutch actuator.
FIG. 10B is a cross-sectional view corresponding to FIG. 8 showing an action of the release shaft at the standby position, upon manual intervention.
FIG. 11 is a cross-sectional view corresponding to FIG. 6 in a state in which the clutch actuator is attached to a right cover.
FIG. 12 is a graph showing characteristics of clutch control, a vertical axis of which shows an output value of the clutch actuator and a horizontal axis of which shows an operation quantity of a release mechanism.
FIG. 13 is a graph corresponding to FIG. 12 showing an action of the embodiment.
FIG. 14 is a time chart showing various states during traveling in a cruise mode when the motorcycle travels from a flat ground and returns again to a flat ground via a downhill road.
FIG. 15 is a time chart of a variant of FIG. 14 showing an example when a vehicle speed exceeds a threshold while the motorcycle travels in a coasting mode.
FIG. 16 is a time chart of another variant of FIG. 14 showing an example when a brake operation is performed while the motorcycle travels in the coasting mode.
FIG. 17 is a flowchart showing processing of switching control between the coasting mode and the cruise mode.

### DETAILED DESCRIPTION OF THE INVENTION

Hereinafter, an embodiment of the present invention will be described with reference to the accompanying drawings. Further, directions of forward, rearward, leftward, rightward, and so on, in the following description are the same as directions in a vehicle described below unless the context clearly indicates otherwise. In addition, in appropriate places in the drawings used in the following description, an arrow FR indicates a forward direction with respect to a vehicle, an arrow LH indicates a leftward direction with respect to the vehicle, and an arrow UP indicates an upward direction with respect to the vehicle.

### <Entire vehicle>

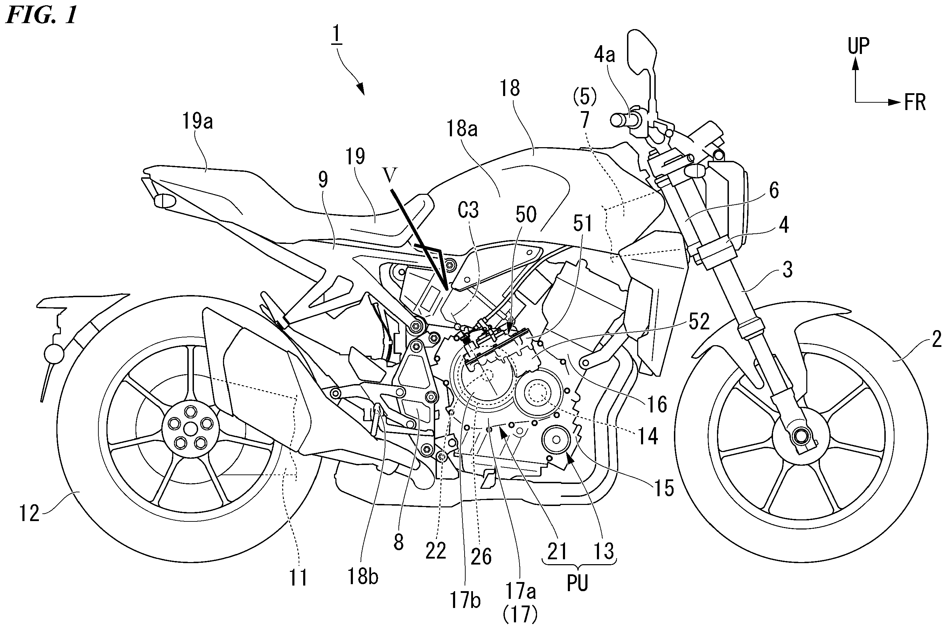

As shown in FIG. 1, the embodiment is applied to a motorcycle 1 as an example of a saddle riding vehicle. A front wheel 2 of the motorcycle 1 is supported by lower end portions of a pair of left and right front forks 3. Upper sections of the left and right front forks 3 are supported by a head pipe 6 of a front end portion of a vehicle body frame 5 via a steering stem 4. A bar type steering handle 4a is attached onto a top bridge of the steering stem 4.

The vehicle body frame 5 includes the head pipe 6, a main frame 7 extending downward and rearward from the head pipe 6 at a center in a vehicle width direction (leftward/rightward direction), a pivot frame 8 provided below a rear end portion of the main frame 7, and a seat frame 9 continuously provided behind the main frame 7 and the pivot frame 8. A front end portion of a swing arm 11 is swingably supported by the pivot frame 8. A rear wheel 12 of the motorcycle 1 is supported by a rear end portion of the swing arm 11.

A fuel tank 18 is supported above the left and right main frames 7. A front seat 19 and a rear seat 19a are supported behind the fuel tank 18 and above the seat frame 9. Knee grip portions 18a recessed inward in the vehicle width direction are formed at both left and right sides of a rear section of the fuel tank 18. The left and right knee grip portions 18a are formed to match inner sides around the left and right knees of a driver who is sitting on the front seat 19. A step 18b on which the driver rests the feet beyond the ankles is supported on both left and right sides below the front seat 19.

A power unit PU including a prime mover of the motorcycle 1 is suspended below the main frame 7. The power unit PU integrally has an engine (internal combustion engine, prime mover) 13 located in the front thereof, and a gearbox (output target) 21 located in the rear thereof. The engine 13 is, for example, a multi-cylinder engine in which a rotary shaft of a crankshaft 14 is provided in a leftward/rightward direction (vehicle width direction).

The engine 13 has a cylinder 16 that stands up above a front section of a crank case 15. A rear section of the crank case 15 is a gearbox case 17 configured to accommodate the gearbox 21. A right cover 17a crossing a right side portion of the gearbox case 17 is attached to a right side portion of the crank case 15. The right cover 17a is also a clutch cover configured to cover a clutch apparatus 26. The power unit PU is linked to the rear wheel 12 via, for example, a chain-type transmission mechanism (not shown).

### <Gearbox>

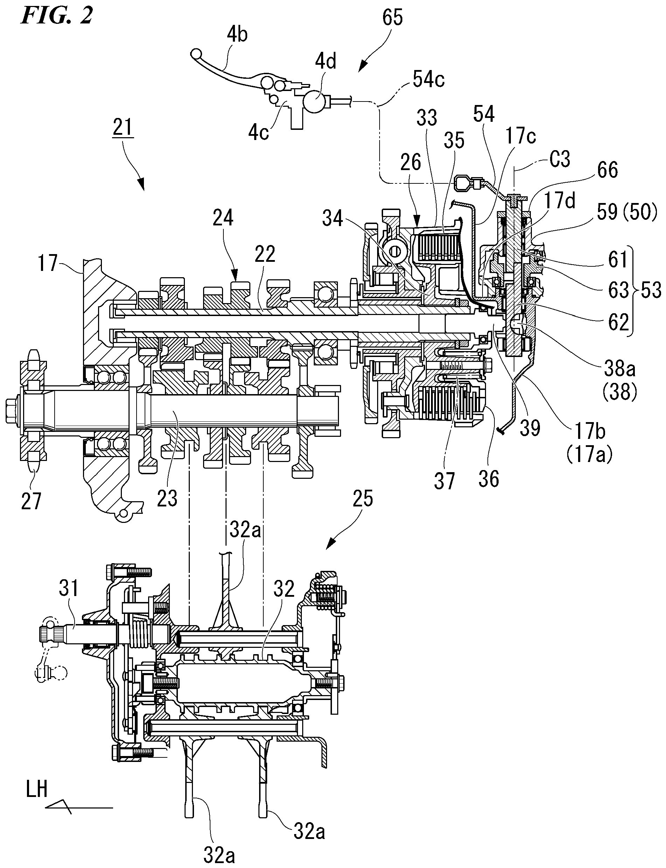

Referring also to FIG. 2, the gearbox 21 is a stepped transmission having a main shaft 22, a counter shaft 23, and a shifting gear group 24 that bridges between both of the shafts 22 and 23. The counter shaft 23 constitutes an output shaft of the gearbox 21 and the power unit PU. A left end portion of the counter shaft 23 protrudes on a left side of the rear section of the gearbox case 17 and is connected to the rear wheel 12 via the chain-type transmission mechanism.

The main shaft 22 and the counter shaft 23 of the gearbox 21 are disposed behind the crankshaft 14. The clutch apparatus 26 is disposed coaxially with the right end portion of the main shaft 22. The clutch apparatus 26 connects and disconnects power transmission between the crankshaft 14 of the engine 13 and the main shaft 22 of the gearbox 21. The connection/disconnection of the clutch apparatus 26 is actuated by at least one of an operation of the clutch operator by an occupant and an actuation of a clutch actuator 50, which will be described below. For example, the clutch operator is a clutch lever 4b.

The clutch apparatus 26 is, for example, a wet multiplate clutch, i.e., a so-called normally closed clutch. Rotating power of the crankshaft 14 is transmitted to the main shaft 22 via the clutch apparatus 26 and transmitted to the counter shaft 23 from the main shaft 22 via an arbitrary gear pair of the shifting gear group 24. A drive sprocket 27 of the chain-type transmission mechanism is attached to a left end portion of the counter shaft 23 protruding on the left side of the rear section of the crank case 15.

A change mechanism 25 configured to switch a gear pair of the shifting gear group 24 is accommodated in the gearbox case 17 in the vicinity of the gearbox 21. The change mechanism 25 actuates a plurality of shift forks 32a according to a pattern of a lead groove formed on an outer circumference thereof, and switches the gear pair used for power transmission between the shafts 22 and 23 in the shifting gear group 24, according to rotation of a hollow cylindrical shift drum 32 parallel to both of the shafts 22 and 23.

Here, the motorcycle 1 employs a so-called semi-automatic gear shift system (automatic clutch type gear shift system) in which only a gear shifting operation of the gearbox 21 (a foot operation of a shift pedal (not shown)) is performed by a driver, and a connection/disconnection operation of the clutch apparatus 26 is automatically performed under electric control according to the operation of the shift pedal.

### <Gear shift system>

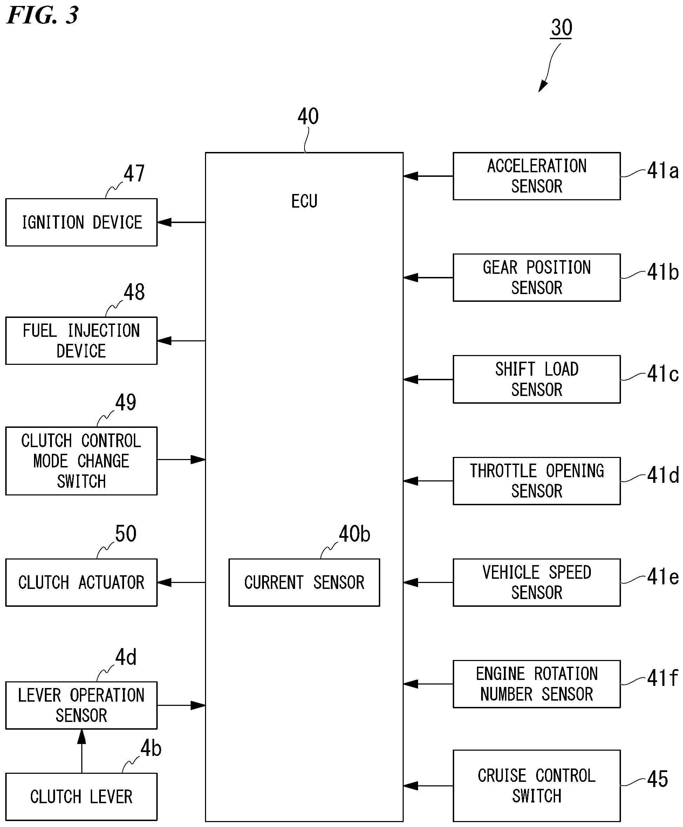

As shown in FIG. 3, the gear shift system 30 includes the clutch actuator 50, an electronic control unit 40 (ECU, a controller), various sensors 41a to 41f, and various devices 47, 48 and 50.

The ECU 40 controls an actuation of the clutch actuator 50 while controlling actuations of the ignition device 47 and the fuel injection device 48 on the basis of detection information of various vehicle states from the acceleration sensor 41a configured to detect a behavior of the vehicle body, the gear position sensor 41b configured to detect a gear shifting level from a rotation angle of the shift drum 32, the shift load sensor 41c (for example, a torque sensor) configured to detect an operation torque input to a shift spindle 31 (see FIG. 2) of the change mechanism 25, the throttle opening sensor 41d configured to detect a throttle opening, the vehicle speed sensor 41e configured to detect a vehicle speed, the engine rotational speed sensor 41f configured to detect an engine rotational speed, and the like. The vehicle speed sensor 41e may be a wheel speed sensor or may be a rotation speed sensor of the output shaft of the power unit PU.

The motorcycle 1 constitutes a by-wire type engine control system (throttle-by-wire) configured to electrically link engine accessories such as a throttle body or the like, and an operator such as a throttle grip or the like operated by a driver.

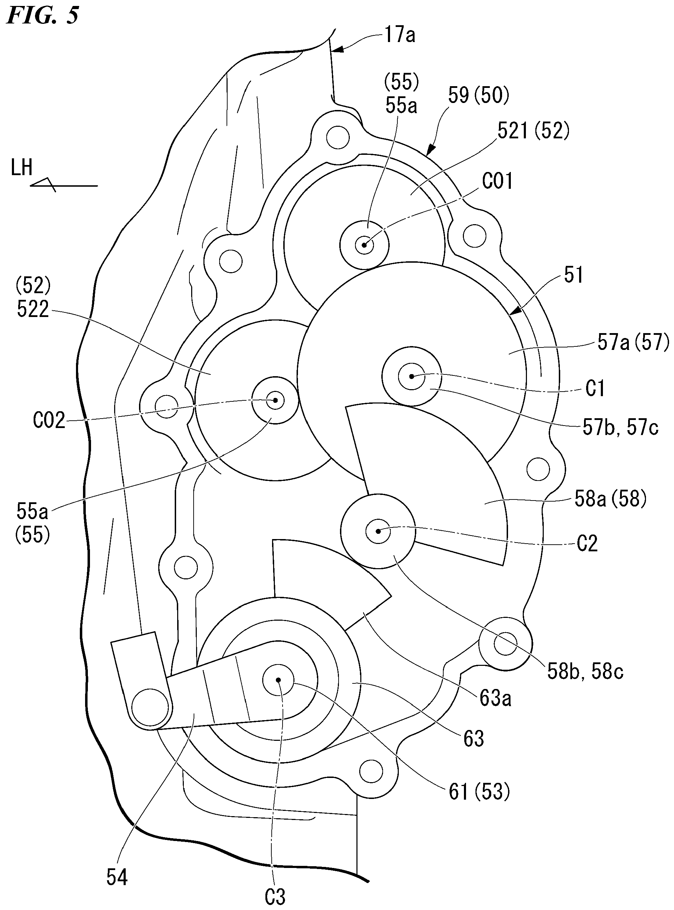

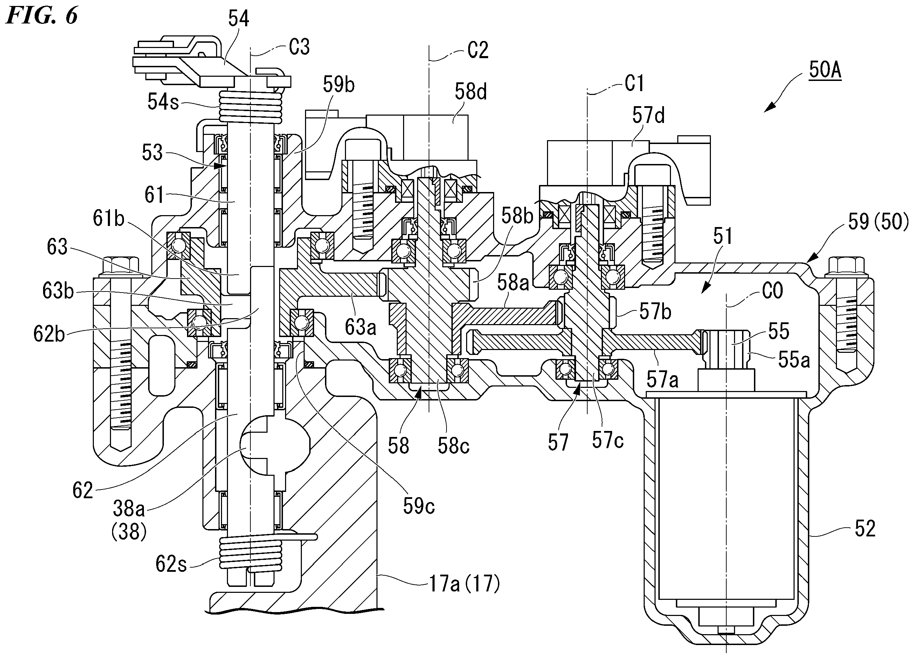

Referring also to FIG. 5 and FIG. 6, the clutch actuator 50 controls a working torque applied to a release shaft 53 in order to connect and disconnect the clutch apparatus 26. The clutch actuator 50 includes an electric motor 52 (hereinafter, simply referred to as the motor 52) as a driving source, and a speed reducer 51 configured to transmit a driving force of the motor 52 to the release shaft 53. The speed reducer 51 includes a first reduction shaft 57 and a second reduction shaft 58, and a first rotation angle sensor 57d and a second rotation angle sensor 58d configured to detect rotation angles are provided on the shafts 57 and 58, respectively.

The ECU 40 calculates a current value supplied to the motor 52 in order to connect and disconnect the clutch apparatus 26 on the basis of a preset calculation program. A supply current to the motor 52 is obtained from a correlation between the current value and the torque output to the motor 52. A target torque of the motor 52 is in proportion to a working torque (a release shaft torque, which will be described below) applied to the release shaft 53. The current value supplied to the motor 52 is detected by a current sensor 40b included in the ECU 40. The actuation of the clutch actuator 50 is controlled according to a variation of the detection value. The clutch actuator 50 will be described below in detail.

### <Clutch apparatus>

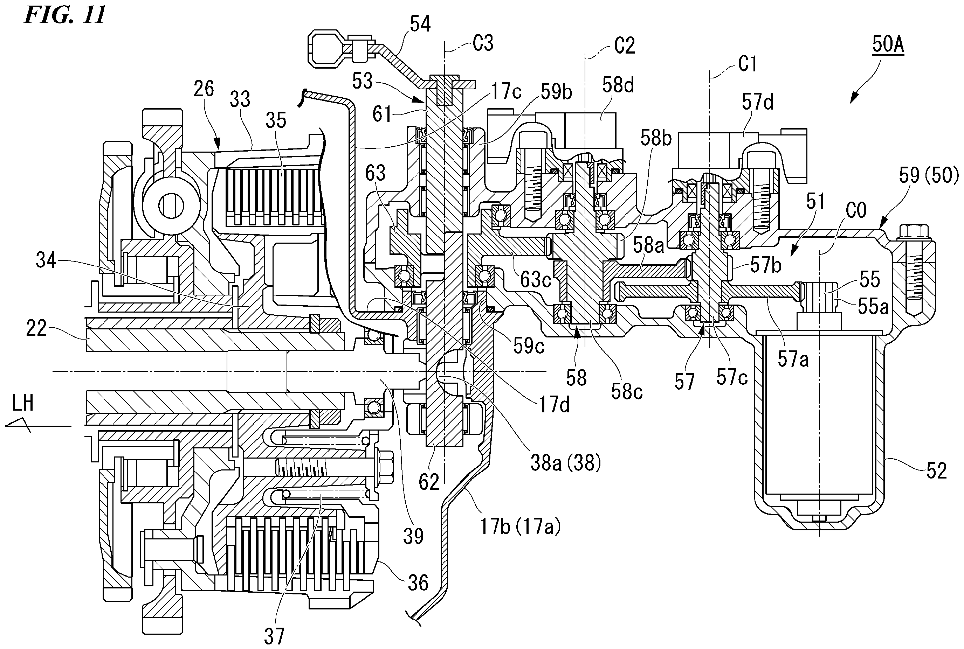

As shown in FIG. 2 and FIG. 11, the clutch apparatus 26 of the embodiment is a multi-plate clutch obtained by stacking a plurality of clutch plates 35 in the axial direction, and a wet clutch with an oil chamber disposed in the right cover 17a. The clutch apparatus 26 includes an outer clutch 33 driven by always transmitting the rotating power from the crankshaft 14, a clutch center 34 disposed in the outer clutch 33 and integrally rotatably supported by the main shaft 22, and the plurality of clutch plates 35 stacked between the outer clutch 33 and the clutch center 34 and configured to frictionally engage them.

A pressure plate 36 having substantially the same diameter as the clutch plates 35 is disposed on the right side of the stacked the clutch plates 35 (an outer side in the vehicle width direction). The pressure plate 36 is biased leftward by receiving an elastic load of a clutch spring 37, and the stacked clutch plates 35 are joined through pressure welding (frictional engagement). Accordingly, the clutch apparatus 26 is in a connection state in which power transmission is possible. The clutch apparatus 26 is a normally closed clutch that is in a connection state during a normal time when there is no input from the outside.

Release of the pressure welding (frictional engagement) is performed by an actuation of a release mechanism 38 inside the right cover 17a. The actuation of the release mechanism 38 is performed by at least one of the operation of the clutch lever 4b by the occupant and the application of a torque by the clutch actuator 50.

### <Release mechanism>

As shown in FIG. 2 and FIG. 11, the release mechanism 38 includes a lifter shaft 39 which is held so as to be reciprocally movable in the axial direction at inside of the right side portion of the main shaft 22, and the release shaft 53 which is disposed to be perpendicular to the lifter shaft 39 in the axial direction and which is held so as to be movable about an axial at an outer portion of the right cover 17a. Line C3 in the drawings designates a center axis of the release shaft 53 extending in an upward/downward direction. The release shaft 53 is inclined in the axial direction to be disposed further rearward as it goes upward in a vertical direction when seen in the axial direction of the main shaft 22 (when seen in a side view of the vehicle) (see FIG. 1). The upper section of the release shaft 53 protrudes outward from the right cover 17a, and a driven clutch lever 54 is integrally rotatably attached to the upper section of the release shaft 53. The driven clutch lever 54 is connected to the clutch lever 4b via an operation cable 54c.

An eccentric cam section 38a is provided in a lower section of the release shaft 53 located inside the right cover 17a. The eccentric cam section 38a is engaged with the right end portion of the lifter shaft 39. The release shaft 53 moves the lifter shaft 39 rightward according to an action of the eccentric cam section 38a through an axial rotation. The lifter shaft 39 is configured to make reciprocating movement integrally with the pressure plate 36 of the clutch apparatus 26. Accordingly, when the lifter shaft 39 is moved rightward, the pressure plate 36 is moved (lifted) rightward against the biasing force of the clutch spring 37, and frictional engagement between the stacked clutch plates 35 is released. Accordingly, the normally closed clutch apparatus 26 becomes in a disconnection state in which power transmission is not possible.

Further, the release mechanism 38 is not limited to the eccentric cam mechanism and may include a rack and pinion, a feed screw, or the like. A mechanism configured to connect the clutch lever 4b and the driven clutch lever 54 is not limited to the operation cable 54c and may include a rod, a link, or the like.

### <Clutch control mode>

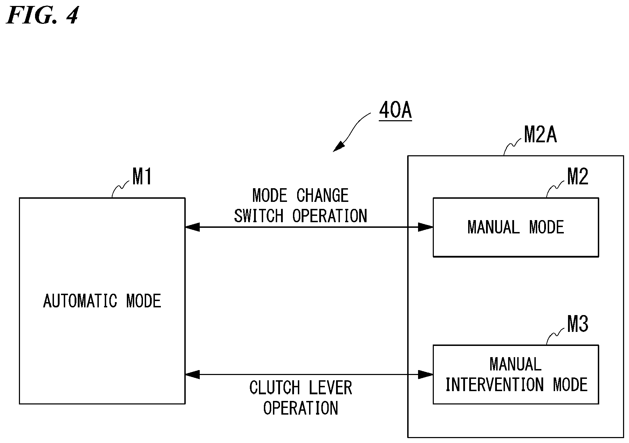

As shown in FIG. 4, a clutch control device 40A of the embodiment has three types of clutch control modes. The clutch control modes are appropriately transitioned between the three types of modes of an automatic mode M1 of performing automatic control, a manual mode M2 of performing a manual operation, and a manual intervention mode M3 of performing a temporary manual operation in accordance with operations of a clutch control mode change switch 49 and the clutch lever 4b (any one of which refers to FIG. 3). Further, the target including the manual mode M2 and the manual intervention mode M3 is referred to as a manual system M2A.

The automatic mode M1 is a mode of calculating a clutch capacity appropriate for a traveling state under automatic departure/gear shifting control and controlling the clutch apparatus 26. The manual mode M2 is a mode of calculating a clutch capacity according to a clutch operation instruction by the occupant and controlling the clutch apparatus 26. The manual intervention mode M3 is a temporary manual operation mode of receiving a clutch operation instruction from the occupant during the automatic mode M1, calculating the clutch capacity from the clutch operation instruction and controlling the clutch apparatus 26. Further, during the manual intervention mode M3, for example, it may be set to return to the automatic mode M1 when a state in which the occupant stops the operation of the clutch lever 4b (a completely released state) continues for a prescribed time.

For example, the clutch control device 40A starts the control from a clutch ON state (a connection state) in the automatic mode M1 upon starting up the system. In addition, the clutch control device 40A is set to return to the clutch ON in the automatic mode M1 upon stoppage of the engine 13 (upon system OFF). In the normally closed clutch apparatus 26, upon performing clutch ON, there is no need for supply of electric power to the motor 52 of the clutch actuator 50. Meanwhile, supply of the electric power to the motor 52 is maintained in the clutch OFF state (disconnection state) of the clutch apparatus 26.

In the automatic mode M1, it is basic to perform the clutch control automatically, and it is possible to travel the motorcycle 1 without lever operation. In the automatic mode M1, the clutch capacity is controlled based on the throttle opening, the engine rotational speed, the vehicle speed, the shift sensor output, and the like. Accordingly, it is possible to depart the motorcycle 1 only by the throttle operation without engine stall (meaning of engine stop or engine stall), and it is possible to shift gears only by the shift operation. In addition, in the automatic mode M1, when the occupant grips the clutch lever 4b, it is possible to switch to the manual intervention mode M3 and disconnect the clutch apparatus 26 arbitrarily.

Meanwhile, in the manual mode M2, the clutch capacity can be controlled according to the lever operation by the occupant (i.e., connection/disconnection of the clutch apparatus 26 is possible). The automatic mode M1 and the manual mode M2 can be switchable to each other by operating the clutch control mode change switch 49 (see FIG. 3), for example, during stoppage of the motorcycle 1 and neutral of the gearbox 21. Further, the clutch control device 40A may include an indicator showing a manual state upon transition to the manual system M2A (the manual mode M2 or the manual intervention mode M3).

In the manual mode M2, it is basic to perform the clutch control manually, and it is possible to control the clutch capacity according to a working angle of the clutch lever 4b (other words, a working angle of the release shaft 53). Accordingly, it is possible to control the connection/disconnection of the clutch apparatus 26 at the will of the occupant. Further, even in the manual mode M2, it is possible to intervene the clutch control automatically when the shift operation is performed with no clutch operation. Hereinafter, the working angle of the release shaft 53 is referred to as a release shaft working angle.

In the automatic mode M1, while the connection/disconnection of the clutch apparatus 26 is performed automatically by the clutch actuator 50, it is possible to temporarily intervene the manual operation in the automatic control of the clutch apparatus 26 by performing the manual clutch operation with respect to the clutch lever 4b (the manual intervention mode M3).

Referring also to FIG. 2, the clutch lever 4b is connected to the driven clutch lever 54, which is attached to the release shaft 53 of the clutch apparatus 26, via the operation cable 54c. The driven clutch lever 54 is attached to the upper end portion of the release shaft 53, which is protruding to the upper section of the right cover 17a, in a state they are integrally rotatable.

In addition, for example, the clutch control mode change switch 49 (see FIG. 3) is provided on the handle switch attached to the steering handle 4a. Accordingly, it is possible for the occupant to easily switch the clutch control mode during normally driving.

### <Clutch actuator>

As shown in FIG. 1, the clutch actuator 50 is attached to the rear upper section of the right cover 17a on the right side of the crank case 15.

Referring to FIG. 5 and FIG. 6 together, the clutch actuator 50 includes the motor 52, and the speed reducer 51 configured to transmit a driving force of the motor 52 to the release shaft 53.

The motor 52 is, for example, a DC motor, and disposed in parallel to, for example, the release shaft 53 in the axial direction. The motor 52 is disposed such that a driving shaft 55 protrudes upward.

In the embodiment, a plurality of (two) motors 52 are provided on a single clutch actuator 50. Hereinafter, the motor 52 located on the clutch actuator 50 on the front side of the vehicle is referred to as a first motor 521, and the motor 52 located on the rear side of the vehicle and the inner side in the vehicle width direction with respect to the first motor 521 is referred to as a second motor 522. Lines C01 and C02 in the drawings indicate center axes (driving axes) of the motors 521 and 522, respectively. For convenience of description, both of the motors 521 and 522 may be collectively referred to as the motor 52. In addition, both of the axes C01 and C02 may be collectively referred to as an axis C0.

The speed reducer 51 reduces the rotating power output from the motor 52 and transmits the reduced rotating power to the release shaft 53. The speed reducer 51 includes, for example, a gear row parallel to the release shaft 53 in the axial direction. The speed reducer 51 includes driving gears 55a provided integrally with the driving shafts 55 of the motors 521 and 522, a first reduction gear 57a with which each of the driving gears 55a is meshed with, a first small diameter gear 57b in coaxial with the first reduction gear 57a, a second reduction gear 58a with which the first small diameter gear 57b is meshed, a second small diameter gear 58b in coaxial with the second reduction gear 58a, a driven gear 63a with which the second small diameter gear 58b is meshed, and a gear case 59 configured to accommodate the gears.

The first reduction gear 57a and the first small diameter gear 57b are rotatably supported integrally with a first support shaft 57c, and constitute the first reduction shaft 57. The second reduction gear 58a and the second small diameter gear 58b are rotatably supported integrally with a second support shaft 58c, and constitute the second reduction shaft 58. The first support shaft 57c and the second support shaft 58c are rotatably supported by the gear case 59. The second reduction gear 58a is a fan-shaped gear about the second support shaft 58c, and provided to widen toward a front side of the second support shaft 58c and an outer side in the vehicle width direction. Line C1 in the drawings indicates a center axis of the first reduction shaft 57, and line C2 indicates a center axis of the second reduction shaft 58.

The driven gear 63a is rotatably provided integrally with the release shaft 53. The driven gear 63a is a fan-shaped gear about the release shaft 53, and provided to expand in front of the release shaft 53. A gear of the speed reducer 51 on a downstream side has a small rotation angle, and the second reduction gear 58a and the driven gear 63a can be used as a fan-shaped gear with a small rotation angle.

As a result, reduction in size of the speed reducer 51 and the clutch actuator 50 becomes possible. That is, even when a large-diameter reduction gear is installed to earn a reduction ratio, by cutting out the other parts than the meshing range of the reduction gear to form a fan shape, in particular, it is possible to suppress the speed reducer 51 from extending outward in the vehicle width direction and achieve reduction in weight of the speed reducer 51.

With this configuration, the motor 52 and the release shaft 53 can always be linked via the speed reducer 51. Accordingly, a system is configured to connect and disconnect the clutch apparatus 26 directly with the clutch actuator 50.

Each of the gears is a flat spur gear with a thickness reduced in the axial direction thickness, and the gear case 59 is also formed in a flat shape with a thickness reduced in the axial direction. Accordingly, the speed reducer 51 becomes less noticeable when seen in a side view of the vehicle. The first rotation angle sensor 57d and the second rotation angle sensor 58d which are connected to one end portions of the first reduction shaft 57 and the second reduction shaft 58, respectively, and configured to detect rotation angles thereof are provided in the gear case 59 on an upper surface side.

The motor 52 is disposed to protrude downward from a front section of the gear case 59. Accordingly, the motor 52 can be disposed forward avoiding a bulging portion 17b that covers the clutch apparatus 26 in the right cover 17a, and the clutch actuator 50 is suppressed from overhanging outward in the vehicle width direction.

Referring to FIG. 1 and FIG. 11, the right cover 17a defines a circular range coaxial with the clutch apparatus 26 when seen in a side view of the vehicle as the bulging portion 17b that bulges outward in the vehicle width direction. A cover concave section 17c is formed in an area facing a rear upper side in the bulging portion 17b by changing the outer side surface towards an inner side in the vehicle width direction with respect to the remaining part. A lower end portion of the cover concave section 17c is a step difference section 17d where an outer side surface of the bulging portion 17b is changed to a stepped shape. An upper section of the release shaft 53 protrudes upward and rearward diagonally from the step difference section 17d.

A driving force of the motor 52 is reduced between the driving gears 55a and the first reduction gear 57a, reduced between the first small diameter gear 57b and the second reduction gear 58a, further reduced between the second small diameter gear 58b and the driven gear 63a, and transmitted to the release shaft 53.

### <Release shaft>

As shown in FIG. 6 to FIG. 8, the release shaft 53 is divided into a plurality of elements so as to be rotatable by separately receiving the input from the clutch actuator 50 and the input by the operation of the occupant.

The release shaft 53 includes an upper section release shaft 61 that constitutes an upper section, a lower release shaft 62 that constitutes a lower section, and an intermediate release shaft 63 disposed to cross between a lower end portion of the upper section release shaft 61 and an upper end portion of the lower release shaft 62.

The upper section release shaft 61 forms a columnar shape, and is rotatably supported by an upper boss section 59b of the gear case 59. The upper section release shaft 61 has an upper end portion protruding on an outer side of the gear case 59, and the driven clutch lever 54 is integrally rotatably supported by the upper end portion. A return spring 54s, which is configured to apply a biasing force in a direction opposite to rotation by the operation of the clutch lever 4b (rotating in a clutch disconnection direction) to the driven clutch lever 54, is attached to the driven clutch lever 54.

The lower release shaft 62 forms a columnar shape, and a lower section is rotatably supported on an inner side of the right cover 17a. The eccentric cam section 38a of the release mechanism 38 is formed in the lower section of the lower release shaft 62 which is facing the inside of the gear case 59. A lower return spring 62s, which is configured to apply a biasing force in a direction opposite to rotation in the clutch disconnection direction to the lower release shaft 62, is attached to the lower end portion of the lower release shaft 62.

A manual operation-side cam 61b forming a fan-shaped cross section and extending in the axial direction is provided on the lower end portion of the upper section release shaft 61.

A clutch-side cam 62b forming a fan-shaped cross section and extending in the axial direction is provided on the upper end portion of the lower release shaft 62 within a range that avoids the manual operation-side cam 61b in the circumferential direction or in the axial direction.

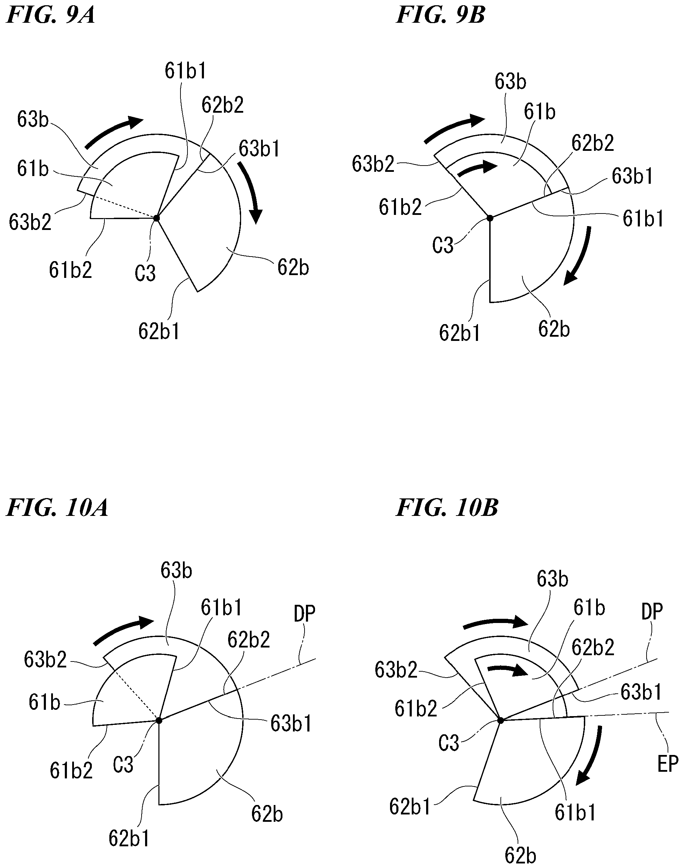

The lower end portion (the manual operation-side cam 61b) of the upper section release shaft 61 and the upper end portion (the clutch-side cam 62b) of the lower release shaft 62 overlap the positions in the axial direction with each other while avoiding each other in the circumferential direction (or overlap the positions in the circumferential direction with each other while avoiding each other in the axial direction). Accordingly, it is possible to press one side surface 61b 1 of the manual operation-side cam 61b in the circumferential direction against the other side surface 62b2 of the clutch-side cam 62b in the circumferential direction and to rotate the lower release shaft 62 (see FIG. 9B and FIG. 10B).

The other side surface 61b2 of the manual operation-side cam 61b in the circumferential direction and one side surface 62b1 of the clutch-side cam 62b in the circumferential direction are separated from each other in the circumferential direction or the axial direction. Accordingly, when an input from the clutch actuator 50 is provided in the clutch-side cam 62b, the lower release shaft 62 can rotate independently from the upper section release shaft 61 (see FIG. 9A and FIG. 10A).

The intermediate release shaft 63 is formed in a cylindrical shape through which engaging portions (upper and lower shaft engaging portions) of the lower end portion of the upper section release shaft 61 and the upper end portion of the lower release shaft 62 can be inserted. The driven gear 63a is supported rotatably and integrally with the intermediate release shaft 63. A control operation-side cam 63b forming a fan-shaped cross section and extending in the axial direction is provided on the intermediate release shaft 63.

The control operation-side cam 63b of the intermediate release shaft 63 and the clutch-side cam 62b of the lower release shaft 62 overlap the positions in the axial direction with each other while avoiding each other in the circumferential direction (or overlap the positions in the circumferential direction with each other while avoiding each other in the axial direction). Accordingly, it is possible to press one side surface 63b1 of the control operation-side cam 63b in the circumferential direction against the other side surface 62b2 of the clutch-side cam 62b in the circumferential direction and to rotate the lower release shaft 62.

In addition, the control operation-side cam 63b is disposed avoiding the manual operation-side cam 61b of the upper section release shaft 61 in the axial direction or the radial direction. Accordingly, when the input from the clutch actuator 50 is transmitted to the clutch-side cam 62b, the lower release shaft 62 can be rotated independently from the upper section release shaft 61. In addition, when there is a manual operation, the upper section release shaft 61 can be rotated independently from the intermediate release shaft 63 on the control side.

The other side surface 63b2 of the control operation-side cam 63b in the circumferential direction and the one side surface 62b1 of the clutch-side cam 62b in the circumferential direction are separated from each other in the circumferential direction. Accordingly, when an input from a manual operation-side cam 61b is provided in the clutch-side cam 62b, the lower release shaft 62 can be rotated independently from the intermediate release shaft 63.

Referring to FIG. 11, the clutch actuator 50 holds the upper section release shaft 61 and the intermediate release shaft 63 in the gear case 59 in a rotatable manner. The clutch actuator 50 constitutes an actuator unit 50A integrally including the upper section release shaft 61 and the intermediate release shaft 63.

The lower release shaft 62 is held on the right cover 17a in a rotatable manner. In the step difference section 17d of the cover concave section 17c of the right cover 17a, an opening section 17e through which an upper end portion of the lower release shaft 62 protrudes and a fastening section 17f of the gear case 59 is provided. An opening section 59c configured to cause the upper end portion of the lower release shaft 62 to face into the gear case 59 is provided in a portion of the gear case 59 facing the step difference section 17d of the cover concave section 17c.

In this configuration, when the actuator unit 50A is attached to the right cover 17a, the upper section release shaft 61, the intermediate release shaft 63 and the lower release shaft 62 are connected to each other to configure the release shaft 53 in a linear shape.

The power unit PU of the embodiment can be configured by replacing the right cover 17a and the release shaft 53 and retrofitting the actuator unit 50A with respect to a manual clutch type power unit operated by an operation of a driver without performing the connection/disconnection operation of the clutch apparatus 26 using the electric control. For this reason, the actuator unit 50A can also be attached to power units of different models, and the actuator unit 50A can be shared among multiple models to easily configure a semi-automatic gear shift system (an automatic clutch type gear shift system).

### <Clutch control>

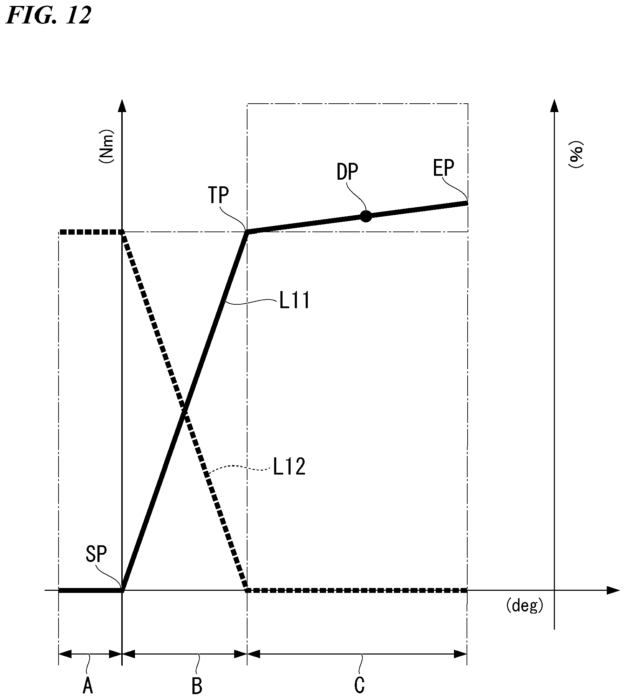

Next, clutch control of the embodiment will be described with reference to a graph of FIG. 12. The graph of FIG. 12 shows clutch characteristics in the automatic mode M1. In the graph of FIG. 12, a vertical axis indicates a torque (Nm) applied to the release shaft 53 and a clutch capacity (%), and a horizontal axis indicates a working angle (deg) of the release shaft 53.

A torque generated in the release shaft 53 corresponds to a torque value calculated by multiplying the torque value, which is obtained based on the supply current value to the motor 52 from a correlation between the supply current to the motor 52 and the torque generated by the motor 52, by a reduction ratio of the speed reducer 51. Hereinafter, the torque of the release shaft 53 is referred to as a release shaft torque. A correlation between the release shaft working angle and the release shaft torque is shown by a line L11 in the graph. A correlation between the release shaft working angle and the clutch capacity is shown by a line L12 in the graph. The line L11 is also a line showing an output value (a reference output value) of the clutch actuator 50 when the clutch apparatus 26 is connected and disconnected in a state in which there is no intervention of the manual operation.

In the automatic mode M1 of the normally closed clutch, when the release shaft torque (the motor output) is "0," there is no operation input to the clutch apparatus 26 (input toward a disconnection side), and the clutch capacity is 100 %. That is, the clutch apparatus 26 maintains a connection state. The state corresponds to a region A of the horizontal axis of FIG. 12. The region A is a play region of the driven clutch lever 54. In the region A, there is no motor output, and the release shaft torque changes at "0." In the region A, there is no actuation of the clutch apparatus 26, the clutch capacity changes at 100 %.

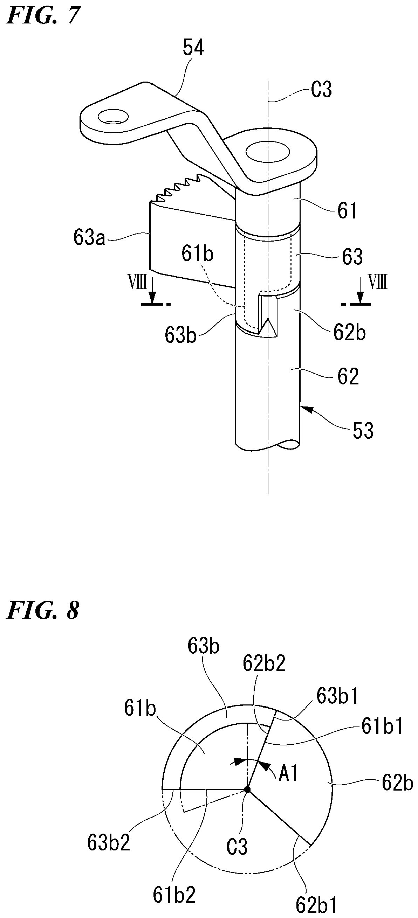

Referring also to FIG. 8, in the region A, the one side surface 61b 1 of the manual operation-side cam 61b of the release shaft 53 in the circumferential direction does not press the other side surface 62b2 of the clutch-side cam 62b in the circumferential direction, and is separated from the clutch-side cam 62b by a biasing force of the return spring 54s (shown by a dotted line in FIG. 8). In the region A, the driven clutch lever 54 is in a play state in which the manual operation-side cam 61b can approach and separate from the clutch-side cam 62b by an angle A1 in the drawings. For example, in the region A, the one side surface 63b 1 of the control operation-side cam 63b in the circumferential direction is abutting the other side surface 62b2 of the clutch-side cam 62b in the circumferential direction.

Referring to FIG. 12, when the release shaft working angle increases and passes the play region A, the release shaft working angle shifts to a half clutch region B.

Referring also to FIG. 9A, in the half clutch region B, the control operation-side cam 63b presses the clutch-side cam 62b and rotates the lower release shaft 62. When the release shaft torque increases, the release mechanism 38 lifts the clutch apparatus 26 and reduces a clutch capacity. That is, the clutch apparatus 26 becomes in a half-clutch state in which partial power transmission is possible. Reference sign SP in FIG. 12 indicates a starting position of an actuation of switching to the half clutch region B from the play region A (an actuation starting position). When the manual operation is intervened in the half clutch region B, the manual operation-side cam 61b abuts the clutch-side cam 62b and cooperates with the control operation-side cam 63b to rotate the lower release shaft 62 (see FIG. 9B).

When the release shaft working angle passes a touch point TP that is an ending point of the half clutch region B, an increase in release shaft torque is slower than that in a region B. A region after the touch point TP at the release shaft working angle is, for example, a clutch disconnection region C in which the clutch capacity remains equivalent to "0." The clutch disconnection region C is, for example, an actuation marginal region in which the release shaft 53 or the like actuates to a mechanical actuation limit position. In the clutch disconnection region C, the release shaft torque is slightly increased. The increment corresponds to an increment of a clutch spring load according to movement of lift parts of the clutch apparatus 26. Reference sign EP in FIG. 12 is a full lift position that is an ending point of the clutch disconnection region C.

For example, a standby position DP is set in the middle of the clutch disconnection region C. At the standby position DP, a slightly higher release shaft torque than the touch point TP where the clutch apparatus 26 starts the connection is applied. While torque transmission slightly occurs at the touch point TP due to an actuation error, torque transmission of the clutch apparatus 26 becomes completely disconnected by applying the release shaft torque to the standby position DP. In addition, a slight low release shaft torque with respect to a full lift position EP is applied at the standby position DP, and thus, it is possible to invalidate the clutch apparatus 26. That is, at the standby position DP, it is possible to cancel the backlash of each part and the actuation reaction force in the clutch apparatus 26, and to increase actuation responsiveness upon connection of the clutch apparatus 26.

Further, when the clutch apparatus 26 is actuated from the connection state toward a disconnection side, a point where the release shaft torque rises (a starting point of the half clutch region B) is an actuation starting position SP, and a point where the clutch apparatus 26 is completely disconnected (an ending point of the half clutch region B) is the touch point TP.

On the contrary, when the clutch apparatus 26 is actuated from the disconnection state toward a connection side, a point where the clutch apparatus 26 starts the connection is the touch point TP, and a point where the clutch apparatus 26 is completely connected is the actuation starting position SP.

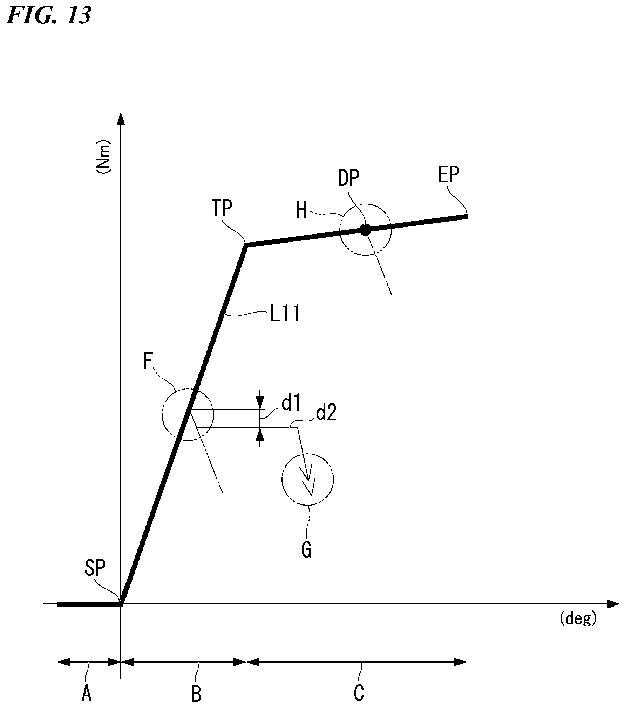

Referring to FIG. 13, in the half clutch region B, driving of the motor 52 is controlled based on the lift load.

In this control, first, a clutch spring load is previously set based on the repulsive force of the clutch spring 37. Next, a lift load applied to the clutch apparatus 26 (an operation load against the clutch spring load) is estimated according to the release shaft torque. Then, a load obtained by reducing the lift load from the clutch spring load is a clutch pressing load applied to the clutch apparatus 26 in actuality.

The clutch capacity is obtained by "a clutch pressing load/clutch spring load." The supply electric power to the motor 52 is controlled such that the clutch capacity is a target value, and the release shaft torque and the lift load are controlled. A motor current value and a lever working angle at each of the actuation starting position SP and the touch point TP are set in advance to default values, or as described below, set by learning control upon ON or OFF of a power supply of the motorcycle 1.

As an example of a sensing configuration, a configuration in which the current sensor 40b is provided in the motor control device (the ECU 40), and the detection value is converted into the motor torque and further converted into the release shaft torque (clutch operation torque) is exemplified.

As shown in FIG. 13, in the half clutch region B, when there is an intervention of the operation (manual operation) of the clutch lever 4b, a measured value of the torque of the release shaft is reduced with respect to the correlation line L11 of the preset release shaft torque (see a portion F in the drawings). Here, when a decrement of the release shaft torque exceeds a predetermined threshold d1, it is determined that there is an intervention of the manual operation, and shifts to a predetermined manual operation intervention control.

In the manual operation intervention control, for example, the motor 52 is feedback-controlled so as to maintain a torque d2, which is a torque after the release shaft torque has reduced by the threshold d1, from detection of the manual operation intervention until the increment of the release shaft working angle becomes a predetermined angle or more. During the current control at this time, a current restriction according to the angle after the touch point TP is provided, and the motor output is substantially 0 on the way. Since the load at this time is substantially low, it is determined that there is a manual intervention. Accordingly, it is possible to suppress discomfort due to sudden disappearance of the torque from the motor 52 after the operation of the clutch lever 4b. After the increment of the release shaft working angle has become the prescribed angle or greater, by gradually reducing the release shaft torque (see a portion G in the drawings), it is possible to suppress electric power consumption by continuing to drive the motor 52 while suppressing the discomfort.

In the clutch disconnection region C, the driving of the motor 52 is controlled based on the lever position (angle).

As described above, in the clutch disconnection region C, the increase in release shaft torque associated with the lift of the clutch apparatus 26 is small. For this reason, in the clutch disconnection region C, the supply electric power to the motor 52 is controlled based on the release shaft working angle. Accordingly, after the touch point TP when the clutch apparatus 26 starts the connection, it is possible to control a disconnection amount of the clutch apparatus 26 more finely.

As an example of the sensing configuration, a configuration in which the first rotation angle sensor 57d and the second rotation angle sensor 58d are provided on the first reduction shaft 57 and the second reduction shaft 58, respectively, and these detection values are converted into release shaft working angles (clutch operation angles) can be exemplified. The first rotation angle sensor 57d and the second rotation angle sensor 58d are provided as a pair for fail, but only one of these may be used.

As shown in FIG. 13, in the clutch disconnection region C, when there is an intervention of the operation (manual operation) of the clutch lever 4b, a measured value of the release shaft torque is reduced with respect to the correlation line L11 of the preset release shaft torque (see a portion H in the drawings).

Referring also to FIG. 10A, for example, in the automatic mode M1, the torque applied to the clutch-side cam 62b by the control operation-side cam 63b is limited to the torque up to the standby position DP. The torque until the clutch-side cam 62b exceeds the standby position DP to reach the full lift position EP is a case when the manual operation that grips the clutch lever 4b is intervened, and a torque exceeding the standby position DP is applied from the manual operation-side cam 61b to the clutch-side cam 62b (see FIG. 10B). Here, the control operation-side cam 63b is separated from the clutch-side cam 62b, and the motor output is substantially 0.

Even before reaching the standby position DP, when the release shaft working angle is in the clutch disconnection region C beyond the touch point TP, the measured value of the release shaft torque is substantially 0 due to the intervention of the manual operation. Accordingly, in the clutch disconnection region C, when the measured value of the release shaft torque is changed to a range of substantially 0, it is determined that there is an intervention of the manual operation and shifts to the predetermined manual operation intervention control.

In the manual operation intervention control, for example, the motor output is maintained so that the release shaft working angle maintains the touch point TP, which is substantially a clutch disconnection position, until the increment of the release shaft working angle becomes the predetermined angle or more after the manual operation intervention has been detected. Accordingly, occurrence of an engine stall is suppressed even when the clutch lever 4b is abruptly released after the intervention of the manual operation.

In this way, more detailed clutch control (optimal control according to a state or characteristics of the clutch apparatus 26) can be performed by properly using the load (current) control and the position (angle) control according to the situation of the clutch apparatus 26.

In the embodiment, the release shaft working angle (the rotation angle of the gear shaft of the speed reducer 51) is detected, a control in which weighting of the current value is increased is performed in the region to the touch point TP that is preset (or learned) (the half clutch region B), and a control in which weighting of the working angle is increased is performed in the region after the touch point TP (the clutch disconnection region C).

In addition, in the embodiment, a change of the current value (conversion to the torque value) of the motor 52 with respect to the release shaft working angle is learned (updated) at a predetermined timing, and the target value according to the situation of the clutch apparatus 26 is set. The driving of the motor 52 is feedback-controlled based on the target value and the detection value of the current sensor 40b of the ECU 40.

### <Change of traveling mode>

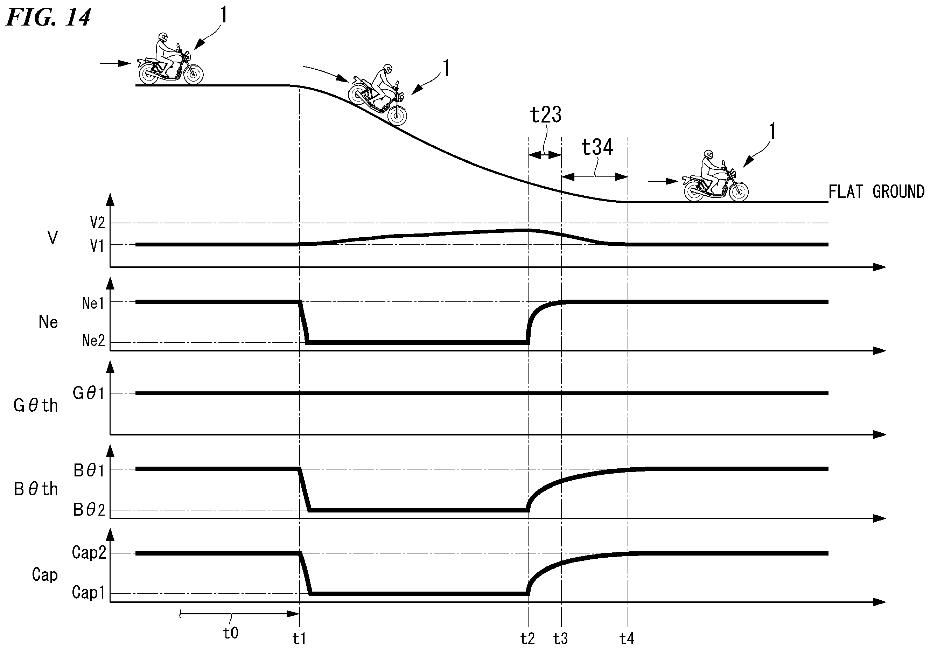

A time chart of FIG. 14 shows a process when the motorcycle 1 returns to the flat ground again via a downhill road during traveling on the flat ground in a cruise traveling state (a traveling state in a cruise mode (a constant speed traveling mode)).

In a time range t0 before a timing t1 in the drawings, the motorcycle 1 is traveling on the flat ground above the slope. The "flat ground" of the embodiment refers to a place where the inclination of the road surface is less than a prescribed angle θr, which will be described below. Here, when a driver operates a cruise control switch 45 (see FIG. 3) under a prescribed traveling condition (for example, a vehicle speed V1 of a prescribed speed or greater), the motorcycle 1 shifts to a cruise mode. In the cruise mode, engine accessories and the like are controlled in order to hold the vehicle speed V1 constant at the time of the switch operation. In the cruise mode, the vehicle speed V1 can be maintained without the need for the driver's operation. In the cruise mode, the value of the vehicle speed V1 can be increased or decreased by the operation of the speed adjustment switch (not shown). In the cruise mode, even when the driver releases his/her hand from the throttle grip, traveling on at the vehicle speed V1 can be continued.

In the cruise mode, unless there is a particular factor that hinders the constant speed traveling of the motorcycle 1, each of an engine rotational speed Ne, a throttle grip opening degree Gθth, a throttle body (valve) opening degree Bθth and a clutch capacity Cap changes constant.

In the cruise mode, for example, when the ECU 40 detects that the motorcycle 1 approaches the downhill road on the basis of the detection information of the acceleration sensor 41a (see FIG. 3) (the timing t1 in the drawings), the motorcycle 1 shifts to a coasting mode (an inertial traveling mode). The shift to the coasting mode is performed, for example, when the acceleration sensor 41a detects a downward gradient of the prescribed angle θr or greater (for example, 10 degrees or more). The shift to the coasting mode may be performed, for example, when the acceleration sensor 41a continuously detects the downward gradient of the prescribed angle θr or greater for a prescribed time or more. In the coasting mode, the clutch apparatus 26 shifts to the disconnection state, and a free running state (inertial traveling state) in which engine braking is not operated is created. In the coasting mode, for example, the engine 13 shifts to a stoppage state, fuel consumption is improved by eliminating the consumption of fuel to an extend to an inertial traveling distance. In the coasting mode, the engine 13 may shift to an idling state. A change-over switch configured to select whether the shift to the coasting mode is possible may be provided.

In the coasting mode, the clutch capacity Cap is reduced from the capacity Cap1 during the cruise mode (for example, 100 % when the clutch apparatus 26 is in a connection state). In the coasting mode, the clutch capacity Cap is a capacity Cap2 for a coasting mode (for example, 0 % when the clutch apparatus 26 is in a disconnection state).

In the coasting mode, the valve opening degree Bθth of the throttle body is reduced from an opening degree Bθ1 during cruise traveling on according to the change of the clutch capacity Cap. In the coasting mode, the valve opening degree Bθth is reduced to an opening degree Bθ2 for a coasting mode (for example, an angle where a throttle is fully closed).

Accordingly, in the coasting mode, the engine rotational speed Ne is reduced from the rotational speed Ne1 during cruise traveling. In the coasting mode, the engine rotational speed Ne is reduced to a rotational speed Ne2 (for example, 0 rpm) during coasting. That is, in the coasting mode, the engine 13 is stopped.

Further, in the coasting mode, the opening degree Gθth of the throttle grip does not have to change just by shifting to the coasting mode.

In addition, in the coasting mode, a vehicle speed V gradually increases within a range less than a threshold V2 by disconnecting the clutch apparatus 26 from a cruise mode of a constant vehicle speed V1 and initially traveling on the downhill road.

In the coasting mode, the motorcycle 1 terminates the coasting mode when the ECU 40 detects that the inclination of the downhill road during current traveling is reduced (less than the prescribed angle θr) (a timing t2 in the drawings) based on the detection information of the acceleration sensor 41a. That is, the clutch apparatus 26 is reconnected while the engine 13 is started again. Here, immediately after the timing t2, first matching control is performed within a time range t23 during the timing t2 to t3 in the drawings. The first matching control matches the engine rotational speed Ne to the rotational speed Ne1 during cruise traveling before fully connecting the clutch apparatus 26. The first matching control connects the clutch apparatus 26 within a half-clutch range while converging the engine rotational speed Ne to the rotational speed Ne1 during cruise traveling.

After the first matching control, second matching control is performed within a time range t34 in timings t3 to t4 in the drawings. The second matching control is control of matching a transmission capacity toward the gearbox 21 (smoothly converging the vehicle speed V to the target vehicle speed V1 during cruise traveling) after the engine rotational speed Ne has converged to the rotational speed Ne1.

In the second matching control, the clutch capacity Cap is gradually increased as the inclination of the downhill road becomes gentle, and at the end of the detection of the downhill road, the clutch apparatus 26 is set to the capacity Cap1 in which the connection state is established.

In the second matching control, the clutch capacity Cap is feedback-controlled such that the current vehicle speed V coincides with the set vehicle speed V1 during cruise traveling, and the clutch apparatus 26 shifts to the connection state. The time range t34 of the second matching control is set longer than the time range t23 of the first matching control.

As described above, the shift from the coasting mode to the engine traveling mode (cruise mode) is completed.

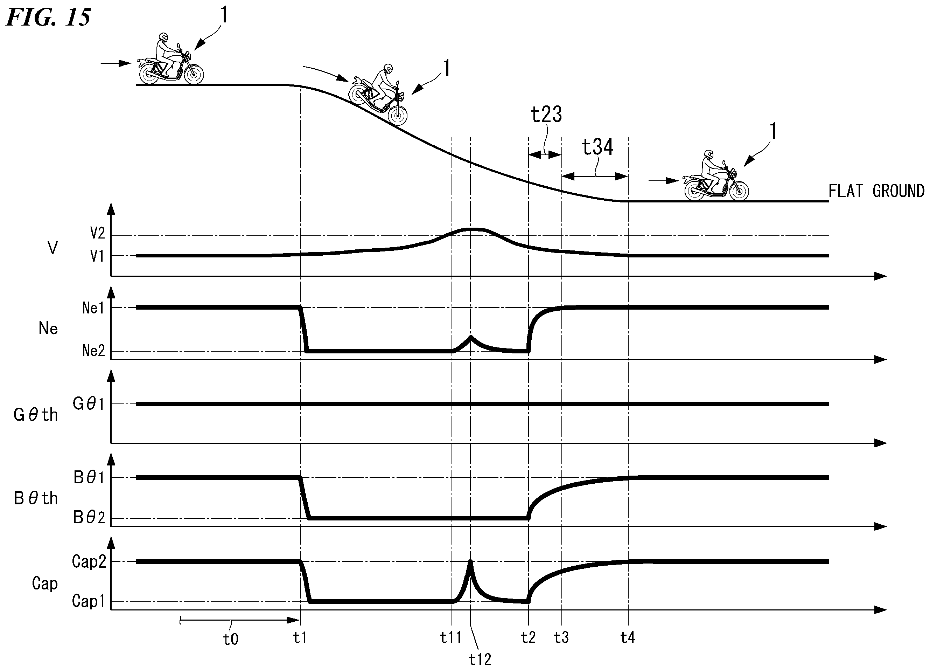

A time chart of FIG. 15 shows a variant including correspondence when the vehicle speed V is the threshold V2 or more between the timings t11 and 112 during the coasting mode with respect to the embodiment of FIG. 14.

In FIG. 15, when the vehicle speed V is increased to the threshold V2 or more, the ECU 40 performs control of increasing the clutch capacity Cap temporarily and generating engine braking. That is, the clutch apparatus 26 is temporarily actuated toward the connection side, and the engine rotational speed Ne is started up by the input from the side of the rear wheel 12. Accordingly, engine braking can be generated and the vehicle speed can be reduced. Here, while the increasing target value of the clutch capacity Cap may be the capacity Cap1 where the clutch apparatus 26 is connected, it may be lower than the capacity Cap1 as long as the engine brake can be obtained.

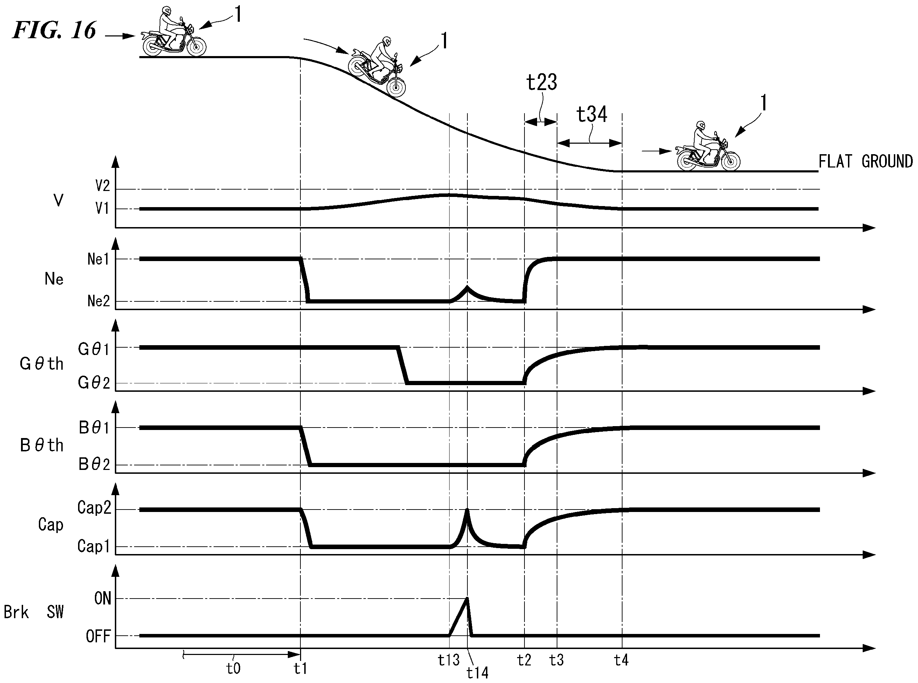

A time chart of FIG. 16 shows a variant including correspondence when a driver performs a brake operation between the timings t13 and 114 during the coasting mode with respect to the embodiment of FIG. 14.

In FIG. 16, when the brake operation is performed by the driver (when the brake switch is turned ON), the ECU 40 performs control of increasing the clutch capacity Cap temporarily and generating the engine brake, like the example of FIG. 15. That is, the clutch apparatus 26 is actuated toward the connection side temporarily, and the engine rotational speed Ne is started up by the input from the side of the rear wheel 12. Accordingly, engine braking is generated, and the vehicle speed can be reduced in combination with the brake actuation by the driver's operation. Further, if a brake system of the motorcycle 1 is a by-wire type configured to electrically line the brake operator and the brake apparatus and a brake assistance by automatic control is obtained, the brake control and the clutch control may be appropriately linked.

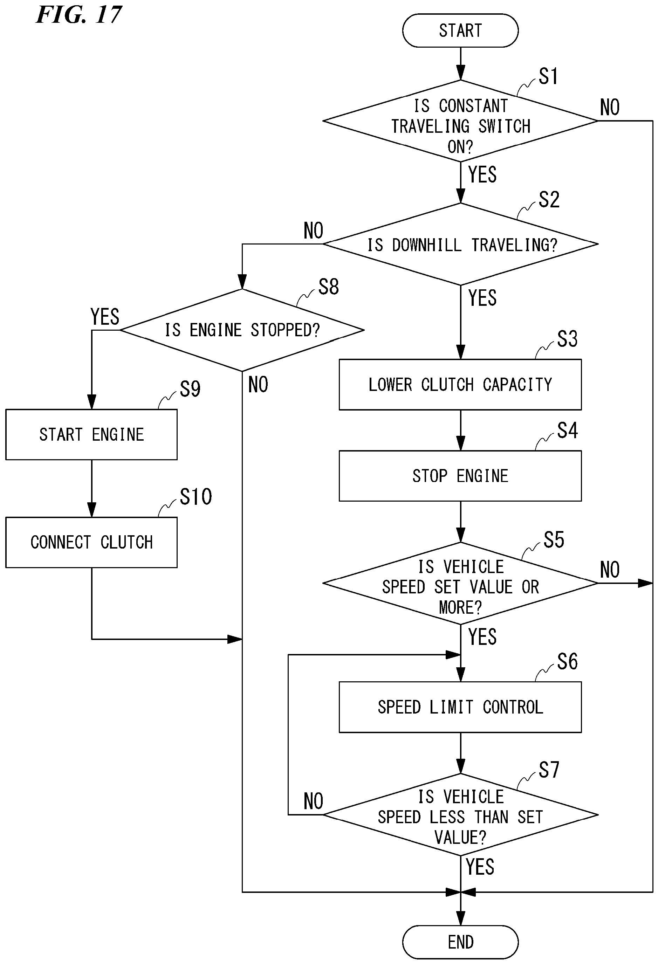

Hereinafter, the processing including switching control between the coasting mode and the cruise mode will be described with reference to the flowchart of FIG. 17. The processing is repeatedly executed at a predetermined period when the power supply is ON (a main switch of the motorcycle 1 is ON).

First, in step S1, it is determined whether the constant speed traveling switch (the cruise control switch 45) is ON. In the case of YES (the constant speed traveling switch is ON) in step S1, the processing shifts to step S2. In the case of NO (the constant speed traveling switch is OFF) in step S1, the processing is terminated once.

In step S2, it is determined whether the motorcycle 1 is traveling on a downhill road with a prescribed gradient or more. The determination is made, for example, depending on whether the detection value of the acceleration sensor 41a is the predetermined threshold (the prescribed angle θr) or more. In the case of YES (the threshold or more) in step S2, the processing shifts to step S3. In the case of NO (less than the threshold) in step S2, the processing shifts to step S8.

In step S3, the clutch capacity Cap is reduced to Cap2 (for example, becomes a clutch disconnection state). In addition, in step S4, the engine rotational speed Ne is reduced to Ne2 (for example, becomes an engine stoppage state).

After that, in step S5, it is determined whether the current vehicle speed V is the set value (the threshold V2) or more. In the case of YES (the set value or more) in step S5, the processing shifts to step S6. In the case of NO (less than the set value) in step S5, the processing is terminated once.

In step S6, the speed restriction control is performed. The speed restriction control also includes a brake actuation by a driver's operation, in addition to the control of increasing the clutch capacity Cap. With the execution of step S6, in step S7, it is determined whether the vehicle speed V is less than the set value. In the case of YES (less than the set value) in step S7, the processing is terminated once. In the case of NO (exceeding the set value) in step S7, the processes of steps S6 and S7 are repeated until it becomes the set value or less.

In the case of NO (the constant speed traveling switch is OFF) in step S 1 and in the case of NO (less than the threshold) in step S2, the processing shifts to step S8, and it is determined whether the engine 13 is in stoppage. In the case of NO (not in the engine stoppage) in step S8, the processing is terminated once. In the case of YES (in the engine stoppage) in step S8, control of shifting to step S9 to start the engine and shifting to step S10 to increase the clutch capacity is performed, and the processing is terminated once.

As described above, in the clutch control device 40A according to the embodiment including the clutch apparatus 26 configured to connect and disconnect power transmission between the engine 13 and the gearbox 21, the clutch actuator 50 configured to output a driving force to actuate the clutch apparatus 26, and the ECU 40 configured to drive the clutch actuator 50, the motorcycle 1 on which the clutch control device 40A is mounted can hold the vehicle speed V constant and execute a cruise mode, a coasting mode in which the engine 13 is stopped or in an idling state can be performed while decreasing the clutch capacity Cap when it is detected that the motorcycle 1 travels a downhill road during the cruise mode, and the motorcycle 1 terminates the coasting mode to return to the cruise mode when it is detected that the downhill road has terminated during the coasting mode.

According to the configuration, when the motorcycle 1 on which the clutch control device 40A is mounted approaches the downhill road during the cruise mode, the clutch capacity Cap is decreased (as a clutch disconnection state) to shift to the coasting mode, and when a state in which the vehicle is traveling on the downhill road has terminated, the coasting mode is terminated so as to return to the cruise mode. In this way, the fuel consumption improvement can be efficiently achieved while suppressing discomfort by appropriately switching between the coasting mode and the cruise mode.

In addition, in the clutch control device 40A, the motorcycle 1 increases the clutch capacity Cap to generate engine braking when it is detected that the vehicle speed V is increased to the threshold V2 or more during the coasting mode.

According to the configuration, when the vehicle speed V is increased to a predetermined level or more due to the downhill road during the coasting mode, speed adjustment can be easily performed under the clutch control by increasing the clutch capacity Cap and generating the engine brake.

In addition, in the clutch control device 40A, the motorcycle 1 increases the clutch capacity Cap to generate the engine brake when it is detected that the brake apparatus is actuated during the coasting mode.

According to the configuration, when the brake apparatus is actuated by the driver's operation during the coasting mode, the brake assistance can be efficiently performed under the clutch control by increasing the clutch capacity Cap and generating the engine brake according to the actuation of the brake apparatus.

In addition, in the clutch control device 40A, the motorcycle 1 controls the clutch capacity Cap such that the current vehicle speed V coincides with the target vehicle speed of the cruise mode when the traveling on the downhill road has terminated and the coasting mode is terminated to return to the cruise mode.

According to the configuration, when the coasting mode is terminated to return to the cruise mode together with the termination of the downhill road, the clutch capacity Cap is controlled while comparing the current vehicle speed V with the target vehicle speed of the cruise mode, and the current vehicle speed V is quickly converged to the target vehicle speed of the cruise mode. Accordingly, the processing can be efficiently returned to the cruise mode while suppressing the discomfort.

Further, the present invention is not limited to the example, and for example, the clutch operator is not limited to the clutch lever 4b but may be various operators such as a clutch pedal or the others. The clutch apparatus is not limited to being disposed between the engine and the gearbox and may be disposed between a prime mover and an arbitrary output target other than the gearbox. The prime mover is not limited to an internal combustion engine and may also be an electric motor.

Like the embodiment, it is not limited to the application to the saddle riding vehicle in which the clutch operation is automated, and can also be applied to a saddle riding vehicle including a so-called clutchless transmission in which gear shifting can be performed by adjusting a driving force without performing a manual clutch operation under a predetermined condition while setting the manual clutch operation to basic.

In addition, all vehicles on which a driver rides on the vehicle body are included as the saddle riding vehicle, and in addition to a motorcycle (including a motorized bicycle and a scooter-type vehicle), a three-wheeled vehicle (including a two-front-wheeled and one-rear-wheeled vehicle in addition to one-front-wheeled and two-rear-wheeled vehicle) or a four-wheeled vehicle may also be included, and a vehicle in which an electric motor is included in a prime mover may also be included.

Then, the configuration in the embodiment is an example of the present invention, and various modifications may be made without departing from the scope of the claims.

While preferred embodiments of the invention have been described and illustrated above, it should be understood that these are exemplary of the invention and are not to be considered as limiting. Additions, omissions, substitutions, and other modifications can be made without departing from the scope of the claims. Accordingly, the invention is not to be considered as being limited by the foregoing description, and is only limited by the scope of the appended claims.

## Claims

1. A vehicle (1) comprising a controller (40) configured to switch between a constant speed traveling mode in which a vehicle speed (V) is held constant and an inertial traveling mode in which a prime mover (13) is stopped or in an idling state, and a clutch apparatus (26) configured to connect and disconnect power transmission between the prime mover (13) and an output target (21),
wherein the controller (40) is configured to control the clutch apparatus (26) and to decrease a clutch capacity (Cap) so as to transit to the inertial traveling mode when detected that the vehicle is traveling on a downhill road during the constant speed traveling mode,
**characterised in that** the controller (40) is configured to terminate the inertial traveling mode of the vehicle (1), to control the clutch apparatus (26) and to increase the clutch capacity (Cap) so as to transit to the constant speed traveling mode by performing a first matching control and a second matching control when detected that an inclination of the downhill road has become less than a prescribed angle (θr) during the inertial traveling mode,
wherein the second matching control is performed after the first matching control has been performed,
wherein the first matching control is a control which connects the clutch apparatus (26) within a half-clutch range while converging an engine rotational speed (Ne) of the prime mover (13) to a rotational speed (Ne1) during traveling in the constant speed traveling mode so as to match the engine rotational speed (Ne) of the prime mover (13) to the rotational speed (Ne1) during traveling in the constant speed traveling mode before fully connecting the clutch apparatus (26), when terminating the inertial traveling mode and returning to the constant speed traveling mode,
wherein the second matching control is a control which gradually increases the clutch capacity (Cap) as the inclination of the downhill road becomes gentle and performs a feedback control which fully connects the clutch apparatus (26) so that a current vehicle speed (V) coincides with a set vehicle speed (V1) of the constant speed traveling mode, and
wherein a time range (t34) of the second matching control is set longer than a time range (t23) of the first matching control.

2. The vehicle according to claim 1, wherein the controller (40) increases the clutch capacity (Cap) and generates engine braking when it is detected that a vehicle speed (V) is increased to a threshold (V2) or more during the inertial traveling mode.

3. The vehicle according to claim 1, wherein the controller (40) increases the clutch capacity (Cap) and generates engine braking according to an operation amount of the brake apparatus when it is detected that a brake apparatus has been actuated during the inertial traveling mode.

## Patentansprüche

1. Ein Fahrzeug (1) mit einer Steuereinheit (40) zum Umschalten zwischen einem Fahrmodus mit konstanter Geschwindigkeit, in dem eine Fahrzeuggeschwindigkeit (V) konstant gehalten wird, und einem Trägheitsfahrmodus, in dem eine Antriebsmaschine (13) angehalten wird oder sich in einem Leerlaufzustand befindet, sowie einer Kupplungsvorrichtung (26) zum Verbinden und Trennen einer Kraftübertragung zwischen der Antriebsmaschine (13) und einem Ausgabeziel (21),
wobei die Steuereinheit (40) zur Steuerung der Kupplungsvorrichtung (26) und zur Verringerung einer Kupplungsleistung (Cap) konfiguriert ist, um in den Trägheitsfahrmodus überzugehen, wenn erfasst wird, dass das Fahrzeug während des Fahrmodus mit konstanter Geschwindigkeit auf einer abwärts verlaufenden Straße fährt,
**dadurch gekennzeichnet, dass**
die Steuereinheit (40) dazu konfiguriert ist, den Trägheitsfahrmodus des Fahrzeugs (1) zu beenden, die Kupplungsvorrichtung (26) zu steuern und die Kupplungsleistung (Cap) zu erhöhen, um in den Fahrmodus mit konstanter Geschwindigkeit überzugehen, indem eine erste Anpassungssteuerung und eine zweite Anpassungssteuerung durchgeführt werden, wenn erfasst wird, dass eine Neigung der abwärts verlaufenden Straße während des Trägheitsfahrmodus geringer als ein vorgegebener Winkel (θr) geworden ist,
wobei die zweite Anpassungssteuerung durchgeführt wird, nachdem die erste Anpassungssteuerung durchgeführt worden ist,
wobei die erste Anpassungssteuerung eine Steuerung darstellt, die die Kupplungsvorrichtung (26) in einem Halbkupplungsbereich verbindet, während eine Motordrehzahl (Ne) der Antriebsmaschine (13) an eine Drehzahl (Ne1) während der Fahrt im Fahrmodus mit konstanter Geschwindigkeit angenähert wird, um die Motordrehzahl (Ne) der Antriebsmaschine (13) an die Drehzahl (Ne1) während der Fahrt im Fahrmodus mit konstanter Geschwindigkeit anzupassen, bevor die Kupplungsvorrichtung (26) vollständig eingerückt wird, wenn der Trägheitsfahrmodus beendet und in den Fahrmodus mit konstanter Geschwindigkeit zurückgekehrt wird,
wobei die zweite Anpassungssteuerung eine Steuerung darstellt, die Kupplungsleistung (Cap) allmählich erhöht, wenn die Neigung der abwärts verlaufenden Straße sanfter wird, und eine Rückkopplungssteuerung durchführt, die die Kupplungsvorrichtung (26) vollständig verbindet, so dass eine aktuelle Fahrzeuggeschwindigkeit (V) mit einer vorgegebenen Fahrzeuggeschwindigkeit (V1) des Fahrmodus mit konstanter Geschwindigkeit zusammenfällt, und
wobei ein Zeitraum (t34) der zweiten Anpassungssteuerung länger als ein Zeitraum (t23) der ersten Anpassungssteuerung eingestellt ist.

2. Das Fahrzeug nach Anspruch 1, wobei die Steuereinheit (40) die Kupplungsleistung (Cap) erhöht und eine Motorbremswirkung erzeugt, wenn erfasst wird, dass eine Fahrzeuggeschwindigkeit (Cap) auf einen Grenzwert (V2) oder darüber während des Trägheitsfahrmodus erhöht wird.

3. Das Fahrzeug nach Anspruch 1, wobei die Steuereinheit (40) die Kupplungsleistung (Cap) erhöht und eine Motorbremswirkung in Abhängigkeit vom Betätigungsgrad der Bremsvorrichtung erzeugt, wenn erfasst wird, dass eine Bremsvorrichtung während des Trägheitsfahrmodus betätigt worden ist.

## Revendications

1. Véhicule (1) comprenant un dispositif de commande (40) configuré pour commuter entre un mode de déplacement à vitesse constante dans lequel une vitesse de véhicule (V) est maintenue constante et un mode de déplacement inertiel dans lequel un appareil moteur (13) est arrêté ou dans un état de ralenti, et un appareil d'embrayage (26) configuré pour connecter et déconnecter une transmission de puissance entre l'appareil moteur (13) et une cible de sortie (21),
dans lequel le dispositif de commande (40) est configuré pour commander l'appareil d'embrayage (26) et pour réduire une capacité d'embrayage (Cap) de manière à passer au mode de déplacement inertiel lorsqu'il est détecté que le véhicule se déplace sur une route en pente descendante pendant le mode de déplacement à vitesse constante,
**caractérisé en ce que**
le dispositif de commande (40) est configuré pour résilier le mode de déplacement inertiel du véhicule (1), pour commander l'appareil d'embrayage (26) et pour augmenter la capacité d'embrayage (Cap) de manière à passer au mode de déplacement à vitesse constante en réalisant une première commande de mise en correspondance et une deuxième commande de mise en correspondance lorsqu'il est détecté qu'une inclinaison de la route en pente descendante est devenue inférieure à un angle prescrit (θr) pendant le mode de déplacement inertiel,
dans lequel la deuxième commande de mise en correspondance est réalisée après que la première commande de mise en correspondance a été réalisée,
dans lequel la première commande de mise en correspondance est une commande qui connecte l'appareil d'embrayage (26) dans une plage de demi-embrayage tout en faisant converger une vitesse de rotation de moteur (Ne) de l'appareil moteur (13) vers une vitesse de rotation (Ne1) pendant un déplacement dans le mode de déplacement à vitesse constante de manière à faire correspondre la vitesse de rotation de moteur (Ne) de l'appareil moteur (13) et la vitesse de rotation (Ne1) pendant un déplacement dans le mode de déplacement à vitesse constante avant de connecter complètement l'appareil d'embrayage (26), lors de la résiliation du mode de déplacement inertiel et du retour vers le mode de déplacement à vitesse constante,
dans lequel la deuxième commande de mise en correspondance est une commande qui augmente progressivement la capacité d'embrayage (Cap) à mesure que l'inclinaison de la route en pente descendante devient douce et réalise une commande de rétroaction qui connecte complètement l'appareil d'embrayage (26) de sorte qu'une vitesse de véhicule (V) actuelle coïncide avec une vitesse de véhicule définie (V1) du mode de déplacement à vitesse constante, et
dans lequel un intervalle de temps (t34) de la deuxième commande de mise en correspondance est défini pour être plus long qu'un intervalle de temps (t23) de la première commande de mise en correspondance.

2. Véhicule selon la revendication 1, dans lequel le dispositif de commande (40) augmente la capacité d'embrayage (Cap) et génère un freinage moteur lorsqu'il est détecté qu'une vitesse de véhicule (V) est augmentée pour atteindre ou dépasser un seuil (V2) pendant le mode de déplacement inertiel.

3. Véhicule selon la revendication 1, dans lequel le dispositif de commande (40) augmente la capacité d'embrayage (Cap) et génère un freinage moteur en fonction de la quantité d'opération de l'appareil de frein lorsqu'il est détecté qu'un appareil de frein a été actionné pendant le mode de déplacement inertiel.
